# EUROPEAN PATENT SPECIFICATION

(11) **EP 3 240 393 B1**
(45) Date of publication and mention of the grant of the patent: **21.08.2019**
(21) Application number: 15837099.9
(22) Date of filing: 30.12.2015
(51) Int. Cl.: A01C 17/00, A01C 15/00

(54) **CENTRIFUGAL SPREADER FOR FERTILISER AND MANURE**
SCHLEUDERSTREUER FÜR DÜNGER UND DUNG
ÉPANDEUR CENTRIFUGE POUR ENGRAIS ET FUMIER

(30) Priority: 30.12.2014 IT PD20140367
(43) Date of publication of application: 08.11.2017
(73) Proprietor: Maschio Gaspardo S.p.A., 35011 Campodarsego (PD) (IT)
(72) Inventor: BUSOLIN, Silvio, 35010 S. Giustina in Colle (PD) (IT)
(74) Representative: Locas, Davide
(86) International application number: PCT/IB2015/060045
(87) International publication number: WO 2016/108194

(56) References cited:
- DE-A1- 2 818 227
- DE-A1- 3 541 415
- DE-A1- 3 643 854
- DE-A1-102008 037 139
- DE-T2- 69 601 703
- DE-U1-202005 008 941
- US-A- 3 406 915

## Description

The present invention relates to a centrifugal spreader for fertilizers and manures, in particular in granular form, of the type comprising a hopper for collecting the material in granular form, a dispensing container which receives the material from the hopper, and a distribution disc for distributing the material in granular form.

In the relevant technical field there are known centrifugal spreaders for fertilizers, each comprising a hopper which collects the material in granular form to be distributed, a container placed under the hopper, into which the amount of material to be distributed is dispensed, and a rotating distribution disc, which receives the material dispensed via an outlet from the container in order to distribute it by means of a centrifugal force.

Typically, an agitator is present inside the dispensing container, this agitator being formed by a rotating body provided with a series of prongs, and mixing the material within the container before it is sent to an outlet opening, in order to prevent the compaction of the material and, more generally, to provide a more uniform outflow.

The agitator may be driven by a dedicated motor, such as that described in International Patent Application WO 2011/113529, or may be driven by the system used to propel the distribution disc, which typically receives its motion from the power take-off of a tractor.

In the latter case, the agitator may be directly connected to the rotation shaft of the distribution disc, as described in EP 784 917 for example, or may be driven via a separate shaft, which also receives its motion from the power take-off via a further distribution unit, as disclosed in EP 1 707 042.

However, the known solutions have a number of drawbacks. If a dedicated motor is used, it is evident that, although this allows the greatest flexibility in the geometry and functional characteristics of the agitator, it implies additional costs due to the presence of supplementary components.

The solution based on a dedicated transmission running from the power take-off also allows a degree of flexibility in the functional characteristics of the agitator, but results in larger overall dimensions and a degree of complexity in mechanical terms.

The use of an agitator driven by the same shaft as the distribution disc, as described in DE 2818227 for example, is the simplest solution in terms of construction, but gives rise to problems in the assembly and maintenance of the spreader.

The reason for this is that it may be necessary to detach the distribution disc for maintenance, for periodic replacement, or for the purpose of changing the operating width, and the last-mentioned design solution gives rise to considerable problems in the performance of this operation, since it is also necessary to detach the dispensing container or other components which are not easily accessible, in order to carry out this operation.

The technical problem underlying the present invention is that of providing a centrifugal spreader of manures, fertilizers and granular material in general which is structurally and functionally designed to overcome the aforementioned difficulty.

This problem is resolved by the present invention by means of a centrifugal spreader of manures, fertilizers and granular material in general, constructed according to Claim 1.

Preferred characteristics of the invention are defined in the dependent claims. The object of the present invention makes it possible to simplify the operations of detaching the distribution disc, using a solution which is simple and economical in terms of construction.

The characteristics and further advantages of the invention will be more clearly apparent from the following detailed description of a preferred, but non-exclusive, exemplary embodiment of the invention, illustrated, for guidance and in a non-limiting way, with reference to the attached drawings, in which:

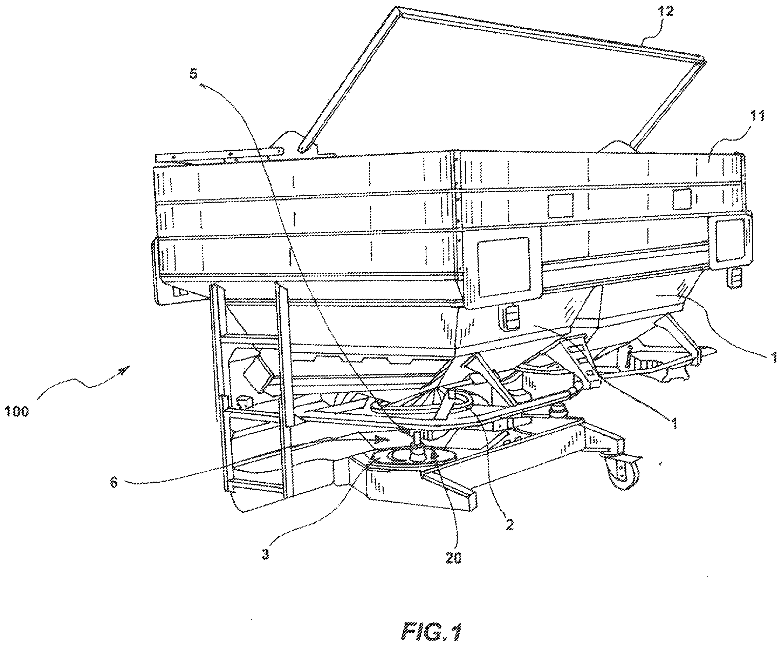

- Figure 1 is a perspective view of a centrifugal spreader for manures, fertilizers and granular material in general, constructed according to the present invention;
- Figures 2A and 2B are, respectively, a front view and a perspective view of a dispensing container, a distribution disc and a transmission assembly, which are components of the spreader of Figure 1;
- Figures 3A and 3B are, respectively, a front view and a perspective view of the components of Figures 2A and 2B, in a step of detachment; and
- Figures 4A and 4B are, respectively, a front view and a perspective view of the components of Figures 2A and 2B, in a detached configuration.
With reference to Figure 1 initially, the number 100 indicates the whole of a centrifugal spreader for manures, fertilizers and granular materials in general, constructed according to the present invention.

The spreader 100 is, for example, of the type suitable for fastening to a three-point linkage of a tractor, and comprises a pair of hoppers 1 to contain the granular material for distribution. Preferably, the spreader 100 also comprises an upper bin 11, to the bottom of which the two hoppers 1 are connected. According to a preferred embodiment, the bin 11 comprises a covering element 12, which controls the movement of a cover sheet, not shown in the figure.

As will be more apparent below, the hoppers 1 have symmetrical characteristics, and therefore reference will be made to only one of the two hoppers below, on the understanding that the same details are applicable to the other hopper. It is also to be understood that the principles described below can also be applied in an equivalent manner to spreaders using a single hopper.

The spreader 100 further comprises a dispensing container 2, located in a lower area of each hopper 1.

The dispensing container 2 receives the granular material from the hopper 1, and comprises at least one outlet opening 20 for the controlled exit of the granular material. In the context of the present invention, the term "controlled exit" indicates that the material is made to flow out of the container 2 while its amount is controlled, this amount being regulated by suitable regulating means not shown in the figure. These regulating means are of a known type, and are therefore not described in greater detail below.

The spreader according to the present invention further comprises a distribution disc 3, placed under the dispensing container 2, which receives the material for distribution by the falling of the material through the outlet opening.

The distribution disc 3 is rotated by means of a suitable transmission assembly 4. Thus the material that has fallen on to the distribution disc 3 can be distributed radially by a centrifugal force produced by the rotation of the disc 3.

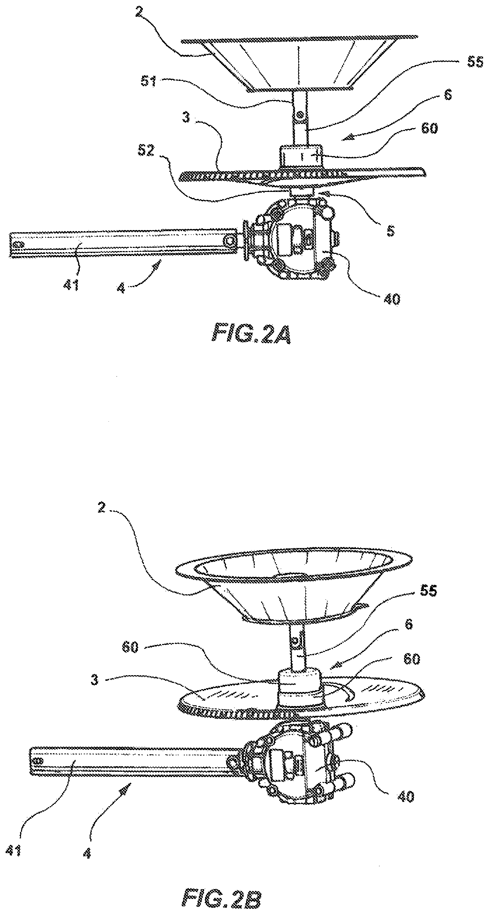

According to a preferred embodiment, the transmission assembly 4 receives its motion from a power take-off of the tractor, not shown in the figure, and transmits a rotary motion to the distribution disc 3, via a series of shafts only partially illustrated in Figures 2A to 4B.

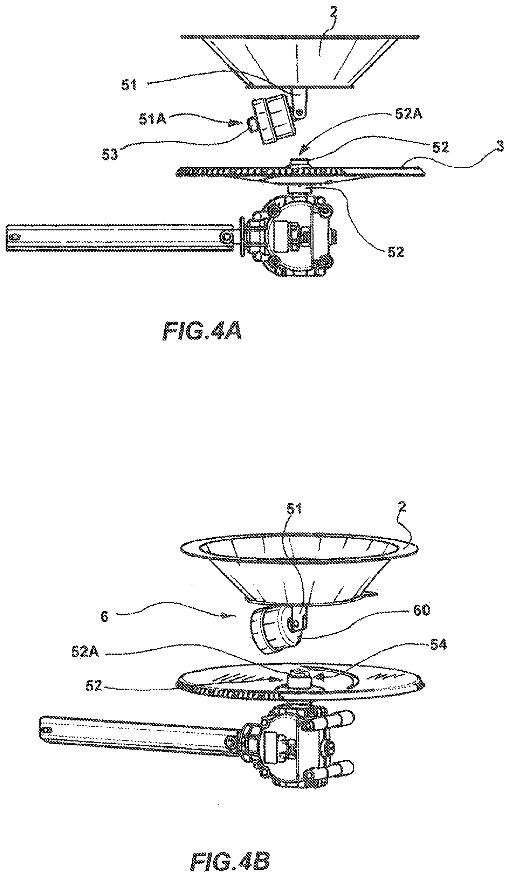

With reference now to Figures 2A and 2B, the transmission assembly 4 comprises, in particular, a rotation shaft 5 which extends between the distribution disc 3, causing it to rotate, and the dispensing container 2. According to a preferred embodiment, the rotary motion is transmitted from a transmission shaft 41 to the rotation shaft 5 via a bevel gear drive 40, of which only an outer casing is illustrated in the figure. Thus the axis of rotation 5 extends substantially vertically in use, and the rotation of the distribution disc 3 imparts an acceleration to the granular material away from the shaft 5. The rotation shaft 5 is divided into a first part 51 and a second part 52, connected or connectable by connecting element 6. In particular, in Figures 2A and 2B the two parts 51 and 52 are shown as being connected to one another by the connecting element 6, while in Figures 4A and 4B the two parts are separated.

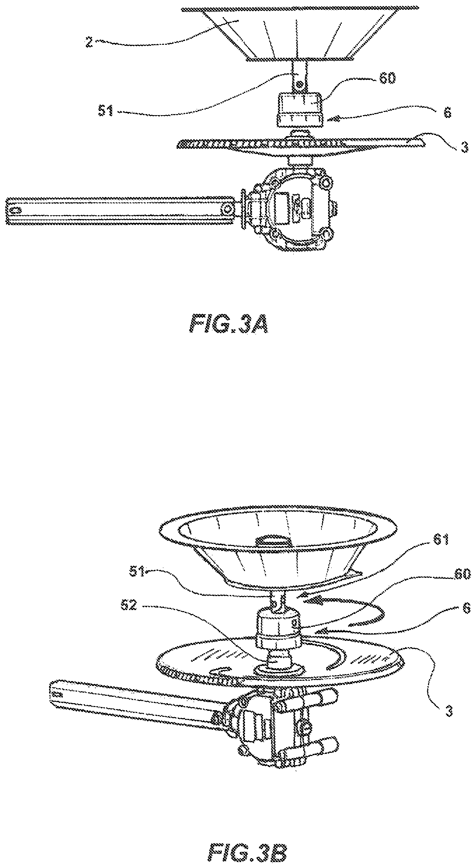

Figures 3A and 3B show the two parts in an intermediate configuration, in which the connecting element 6 is placed in a release position, by procedures illustrated in greater detail below.

With reference again to Figures 2A and 2B, according to a preferred embodiment, the spreader 100 further comprises an agitator, not shown in the figure, housed inside the dispensing container 2 upstream of the outlet opening 20. In this case, the first part 51 is fixed to the agitator and the second part 52 is fixed to the distribution disc 3, and the connection between the two parts 51 and 52 is such that they are fixed with respect to rotation, so that the agitator is also driven by means of the rotation shaft 5.

In this case, therefore, the part 51 is supported rotatably on the dispensing container 2, by means of a bearing for example.

According to a preferred embodiment, the connecting element 6 comprises a locking device 60 which can slide along the rotation shaft 5. Preferably, the locking device 60 is formed by a block slidably associated with the first and second parts 51, 52 so that it can engage simultaneously with the first and second part 51, 52, as shown in Figures 2A and 2B, or with only one of the parts, as in Figures 3 and 4.

Thus, when the block engages both parts simultaneously, respective ends 51A, 52A of the first and second parts 51, 52 are fixed so that they cannot be moved away from one another, and so that the two parts are kept fixed with respect to rotation.

As shown in Figures 3A and 3B, the locking device 60 can be made to slide axially along the shaft 5 so as to free the area of connection between the two ends. In particular, in the present embodiment, the locking device 60 can be moved upwards, remaining associated solely with the part 51 supported by the dispensing container 2. Additionally, according to a preferred embodiment, a threaded coupling can be provided between the locking device and one of the two parts of the shaft 5, so that the axial movement is produced by rotating the locking device 60 on the thread formed on the shaft 5. Furthermore, preferably, a safety device can also be provided to prevent the accidental movement of the locking device 60, using a pin that can be inserted into a corresponding hole, for example. Alternatively, it is possible to provide for the use of right- and left-hand threads, so as to prevent unintentional unscrewing during the movement of the discs.

For the purpose of separating the two ends away, according to a preferred embodiment, one of the two ends 51A, 52A is formed in an articulated portion 55, rotatably connected to one of the two parts 51, 52. Thus, when the locking device 60 is moved so as to release the two ends, the end 51A can be separated from the other end by rotating the articulated portion 55, as shown in Figures 4A and 4B.

Preferably, the threaded portion is formed in the part 52, while it can slide freely on the articulated portion 55.

According to a preferred embodiment, the two ends 51A and 52A are shaped so that, when aligned and positioned near one another, they engage with one another in such a way that the two parts 51 and 52 are fixed with respect to rotation about the axis defined by the shaft 5.

Preferably, the coupling between the ends is provided by means of a socket 54 and a respective extension 53 whose shapes are complementary to one another.

According to a preferred embodiment, the extension 53 takes the form of a strip extending parallel to an axis of extension of the rotation shaft 5. In this case, the extension 53 can easily be inserted into the socket 54 or extracted therefrom, by rotating the articulated portion 55.

More generally, however, the respective ends 51A, 52A and the connecting element 6 are associated with one another for operation by a shape coupling, so as to prevent the separation of the ends and keep the two parts 51 and 52 of the shaft 5 fixed with respect to rotation.

Thus the invention resolves the problem which was proposed, while providing a number of advantages. The principal advantage offered by the invention lies in the fact that dividing the shaft into two parts which are connectable to one another makes it possible to remove the distribution disc without the need to detach the dispensing container.

Additionally, the presence of an articulated portion and the configuration described above make it possible to separate the locking device from the distribution disc, thus facilitating the operations of detaching the latter.

The discovery according to the present invention is also particularly suitable, in terms of reliability and robustness, for use in dusty environments, which is typically the case during operations of manuring and fertilizer distribution.

## Claims

1. Centrifugal spreader (100) for manures, fertilizers and granular materials in general, comprising:
- a hopper (1) for containing the granular material;
- a dispensing container (2) which receives the granular material from the hopper (1) and comprises at least one outlet opening (20) for the controlled exit of the granular material;
- a distribution disc (3) which receives the granular material from the outlet opening (20);
- a transmission assembly (4) which transmits a rotary motion to the distribution disc (3) and which comprises a rotation shaft (5) extending between the distribution disc (3) and the dispensing container (2), wherein the rotation shaft (5) is divided into a first (51) and a second (52) part, connected or connectable by a connecting element (6) which is selectively capable of either fixing the two parts (51, 52) to one another rotationally or separating them, **characterized in that** one of the first and second parts (51, 52) comprises an articulated portion (55) rotatably connected thereto.

2. A centrifugal spreader (100) according to Claim 1, wherein the first part (51) is fixed to an agitator housed in the dispensing container (2), and the second part (52) is fixed or not fixed because it is not fastened rigidly to the distribution disc (3).

3. A centrifugal spreader (100) according to Claim 1 or 2, wherein the first and second parts (51, 52) comprise respective ends (51A, 52A) which can be separated from one another and can be connected by means of the connecting element (6).

4. A centrifugal spreader (100) according to Claim 3, wherein the first and second ends (51A, 52A) comprise a socket (54) and a respective extension (53) whose shapes are complementary to one another.

5. A centrifugal spreader (100) according to Claim 4, wherein the extension (53) takes the form of a strip extending parallel to an axis of extension of the rotation shaft (5).

6. A centrifugal spreader (100) according to any one of the preceding claims, wherein the connecting element (6) comprises a locking device (60) adapted to prevent the separation of the first and second parts (51, 52).

7. A centrifugal spreader (100) according to Claim 6, wherein the locking device (60) is slidably associated with the first and second parts (51, 52) in such a way as to engage the first and second parts (51, 52) simultaneously or only one of these parts.

8. A centrifugal spreader (100) according to Claim 7, wherein the locking device (60) is associated with the part (51) fixed to the dispensing container (2).

9. A centrifugal spreader (100) according to Claim 8, wherein said locking device (60) is formed by a block slidably associated with the first and second parts (51, 52), such that when the block engages both parts simultaneously, respective ends (51A, 52A) of the first and second parts (51, 52) are fixed so that they cannot be moved away from one another, and so that the two parts are kept fixed with respect to rotation.

10. A centrifugal spreader (100) according to Claim 9, wherein the locking device (60) is made to slide axially along said shaft (5) so as to free an area of connection between the two ends.

11. A centrifugal spreader (100) according to Claim 10, wherein a threaded coupling is provided between the locking device and one of the two parts of the shaft (5), so that the axial movement is produced by rotating the locking device (60) on a thread formed on the shaft (5).

12. A centrifugal spreader (100) according to Claim 11, wherein a safety device is provided to prevent the accidental movement of the locking device (60).

13. A centrifugal spreader (100) according to any one of the preceding claims, wherein the rotary motion is transmitted from a transmission shaft (41) to the rotation shaft (5) via a bevel gear drive (40).

## Patentansprüche

1. Zentrifugalstreuer (100) für im Wesentlichen Festmist, Düngemittel und Granulate, umfassend:
- einen Trichter (1) zum Aufnehmen des Granulats;
- einen Ausgabebehälter (2), der das Granulat aus dem Trichter (1) aufnimmt und zumindest eine Auslassöffnung (20) zum gesteuerten Austritt des Granulats aufweist;
- eine Verteilerscheibe (3), die das Granulat aus der Auslassöffnung (20) aufnimmt;
- eine Getriebeanordnung (4), die eine Drehbewegung zur Verteilerscheibe (3) überträgt, und die eine Drehwelle (5) aufweist, die sich zwischen der Verteilerscheibe (3) und dem Ausgabebehälter (2) erstreckt, wobei die Drehwelle (5) in einen ersten (51) und einen zweiten (52) Teil unterteilt ist, die durch ein Verbindungselement (6) verbunden oder verbindbar sind, das wahlweise in der Lage ist, die beiden Teile (51, 52) drehbar miteinander zu fixieren oder sie zu trennen, **dadurch gekennzeichnet, dass** eins der ersten und zweiten Teile (51, 52) einen gelenkigen Abschnitt (55) aufweist, der drehbar damit verbunden ist.

2. Zentrifugalstreuer (100) nach Anspruch 1, wobei der erste Teil (51) an einem Rührer fixiert ist, der im Ausgabebehälter (2) aufgenommen ist, und der zweite Teil (52) fixiert oder nicht fixiert ist, weil er nicht starr an der Verteilerscheibe (3) befestigt ist.

3. Zentrifugalstreuer (100) nach Anspruch 1 oder 2, wobei die ersten und zweiten Teile (51, 52) jeweilige Enden (51A, 52A) aufweisen, die voneinander getrennt werden und mittels des Verbindungselements (6) verbunden werden können.

4. Zentrifugalstreuer (100) nach Anspruch 3, wobei die ersten und zweiten Enden (51A, 52A) einen Sockel (54) und eine jeweilige Verlängerung (53) aufweisen, deren Formen komplementär zueinander sind.

5. Zentrifugalstreuer (100) nach Anspruch 4, wobei die Verlängerung (53) die Form eines Streifens aufweist, der sich parallel zu einer Verlängerungsachse der Drehwelle (5) erstreckt.

6. Zentrifugalstreuer (100) nach einem der vorhergehenden Ansprüche, wobei das Verbindungselement (6) eine Verriegelungsvorrichtung (60) aufweist, die angepasst ist, um die Trennung der ersten und zweiten Teile (51, 52) zu verhindern.

7. Zentrifugalstreuer (100) nach Anspruch 6, wobei die Verriegelungsvorrichtung (60) den ersten und zweiten Teilen (51, 52) derart verschiebbar zugeordnet ist, um mit den ersten und zweiten Teilen (51, 52) gleichzeitig oder nur mit einem dieser Teile in Eingriff zu stehen.

8. Zentrifugalstreuer (100) nach Anspruch 7, wobei die Verriegelungseinrichtung (60) dem Teil (51) zugeordnet ist, der am Ausgabebehälter (2) fixiert ist.

9. Zentrifugalstreuer (100) nach Anspruch 8, wobei die Verriegelungsvorrichtung (60) durch einen Block gebildet ist, der den ersten und zweiten Teilen (51, 52) verschiebbar zugeordnet ist, sodass, wenn der Block in beide Teile gleichzeitig eingreift, die jeweiligen Enden (51A, 52A) der ersten und der zweiten Teile (51, 52) so befestigt sind, dass sie nicht voneinander wegbewegt werden können, und dass die beiden Teile drehfest gehalten werden.

10. Zentrifugalstreuer (100) wobei die Verriegelungsvorrichtung (60) sich axial entlang der Welle (5) verschiebt, um einen Verbindungsbereich zwischen den beiden Enden freizugeben.

11. Zentrifugalstreuer (100) nach Anspruch 10, wobei zwischen der Verriegelungsvorrichtung und einem der beiden Teile der Welle (5) eine Schraubverbindung vorgesehen ist, sodass die Axialbewegung durch Drehen der Verriegelungsvorrichtung (60) an einem auf der Welle (5) ausgebildeten Gewinde erzeugt wird.

12. Zentrifugalstreuer (100) nach Anspruch 11, wobei eine Sicherheitsvorrichtung vorgesehen ist, um die unbeabsichtigte Bewegung der Verriegelungsvorrichtung (60) zu verhindern.

13. Zentrifugalstreuer (100) nach einem der vorhergehenden Ansprüche, wobei die Drehbewegung von einer Getriebewelle (41) über ein Kegelradgetriebe (40) auf die Drehwelle (5) übertragen wird.

## Revendications

1. Epandeur centrifuge (100) pour fumier, engrais et matériaux granulaires en général, comprenant :
- une trémie (1) pour contenir le matériau granulaire ;
- un contenant de distribution (2) qui reçoit le matériau granulaire de la trémie (1) et comprend au moins une ouverture de sortie (20) pour la sortie commandée du matériau granulaire ;
- un disque de distribution (3) qui reçoit le matériau granulaire de l'ouverture de sortie (20) ;
- un ensemble de transmission (4) qui transmet un mouvement rotatif au disque de distribution (3) et qui comprend un arbre de rotation (5) s'étendant entre le disque de distribution (3) et le contenant de distribution (2), dans lequel l'arbre de rotation (5) est divisé en une première (51) et une seconde (52) partie, raccordées ou raccordables par un élément de raccordement (6) qui est apte sélectivement à fixer les deux parties (51, 52) l'une à l'autre en rotation ou les séparer, **caractérisé en ce qu'**une des première et seconde parties (51, 52) comprend une portion articulée (55) raccordée en rotation à celle-ci.

2. Epandeur centrifuge (100) selon la revendication 1, dans lequel la première partie (51) est fixée à un agitateur logé dans le contenant de distribution (2), et la seconde partie (52) est fixée ou n'est pas fixée parce qu'elle n'est pas fixée rigidement au disque de distribution (3).

3. Epandeur centrifuge (100) selon la revendication 1 ou 2, dans lequel les première et seconde parties (51, 52) comprennent des extrémités respectives (51A, 52A) qui peuvent être séparées l'une de l'autre et peuvent être raccordées au moyen de l'élément de raccordement (6).

4. Epandeur centrifuge (100) selon la revendication 3, dans lequel les première et seconde extrémités (51A, 52A) comprennent une douille (54) et une extension respective (53) dont les formes sont complémentaires l'une de l'autre.

5. Epandeur centrifuge (100) selon la revendication 4, dans lequel l'extension (53) prend la forme d'une bande s'étendant parallèlement à un axe d'extension de l'arbre de rotation (5).

6. Epandeur centrifuge (100) selon l'une quelconque des revendications précédentes, dans lequel l'élément de raccordement (6) comprend un dispositif de verrouillage (60) adapté pour empêcher la séparation des première et seconde parties (51, 52).

7. Epandeur centrifuge (100) selon la revendication 6, dans lequel le dispositif de verrouillage (60) est associé de manière coulissante aux première et seconde parties (51, 52) de manière à mettre en prise les première et seconde parties (51, 52) simultanément ou une seule de ces parties.

8. Epandeur centrifuge (100) selon la revendication 7, dans lequel le dispositif de verrouillage (60) est associé à la partie (51) fixée au contenant de distribution (2).

9. Epandeur centrifuge (100) selon la revendication 8, dans lequel ledit dispositif de verrouillage (60) est formé par un bloc associé de manière coulissante aux première et seconde parties (51, 52), de sorte que lorsque le bloc met en prise les deux parties simultanément, des extrémités respectives (51A, 52A) des première et seconde parties (51, 52) soient fixées de sorte qu'elles ne puissent être éloignées l'une de l'autre, et de sorte que les deux parties soient maintenues fixes par rapport à la rotation.

10. Epandeur centrifuge (100) selon la revendication 9, dans lequel le dispositif de verrouillage (60) est amené à coulisser axialement le long dudit arbre (5) de sorte à libérer une zone de raccordement entre les deux extrémités.

11. Epandeur centrifuge (100) selon la revendication 10, dans lequel un couplage fileté est fourni entre le dispositif de verrouillage et une des deux parties de l'arbre (5) de sorte que le mouvement axial soit produit par rotation du dispositif de verrouillage (60) sur un filet formé sur l'arbre (5).

12. Epandeur centrifuge (100) selon la revendication 11, dans lequel un dispositif de sécurité est fourni pour empêcher le mouvement accidentel du dispositif de verrouillage (60).

13. Epandeur centrifuge (100) selon l'une quelconque des revendications précédentes, dans lequel le mouvement rotatif est transmis d'un arbre de transmission (41) à l'arbre de rotation (5) via un entraînement à engrenage conique (40).
